# EUROPEAN PATENT SPECIFICATION

(11) **EP 4 372 108 B1**
(45) Date of publication and mention of the grant of the patent: **11.11.2026**
(21) Application number: 23163519.4
(22) Date of filing: 22.03.2023
(51) Int. Cl.: C22B 1/00, C22B 3/12, C22B 7/00, C22B 7/04, C22B 26/12, H01M 10/54

(54) **LITHIUM RECOVERY FROM SLAGS**
LITHIUMRÜCKGEWINNUNG AUS SCHLACKEN
RÉCUPÉRATION DE LITHIUM À PARTIR DE SCORIES

(43) Date of publication of application: 22.05.2024
(73) Proprietor: Umicore, 1000 Brussels (BE)
(72) Inventor: TANSKANEN, Pekka Antero, 90014 Oulu (FI); LAINE, Petteri Heikki Samuli, 90014 Oulu (FI); LASSI, Ulla Marianne, 90014 Oulu (FI); CALLEBAUT, Willem, 2250 Olen (BE); VERHEES, Pieter, 2250 Olen (BE)

(56) References cited:
- WO-A1-2018/082961
- CN-A- 115 784 272
- US-A1- 2022 352 570
- GEORGI-MASCHLER T. ET AL: "Development of a recycling process for Li-ion batteries", JOURNAL OF POWER SOURCES, vol. 207, 1 June 2012 (2012-06-01), AMSTERDAM, NL, pages 173 - 182, XP055910047, ISSN: 0378-7753, DOI: 10.1016/j.jpowsour.2012.01.152

## Description

The present invention concerns a process for the recovery of Li (lithium) contained in metallurgical slags. Such slags are typically produced when Li-batteries or their waste are recycled using a smelting process. Relatively noble metals such as Cu, Co, and Ni report to an alloy phase, while more easily oxidized elements, such as Li, report to a slag phase. Both phases are left to decant and are separately tapped.

Due to the relative scarcity of Li, it has recently become economical to recover it from slags. Known processes adopt acidic leaching to dissolve the Li.

WO2022085222 discloses a process for the recovery of lithium from secondary battery material. It is taught that it is essential to ensure an Al to Li mass ratio of 6 or less. This requirement is fulfilled by regulating the amount of Al in the slag according to different schemes. The leaching of the slag is performed using an acidic aqueous solution. Particle diameters between 0.5 and 5 mm are preferred. A purification step is then performed on the leachate by raising its pH to up to 14 by adding an alkaline substance. The mixture is filtered and the Li in the solution is precipitated as carbonate.

Georgi-Maschler et al. ("Development of a recycling process for Li-ion batteries", Journal of Power Sources, vol. 207, pages 173-182, 2012) describes on a very general level a method of hydrometallurgical recovery of lithium from slag, derived from waste batteries. Flue dust and milled slag are subjected to leaching, without giving any further details on the applied conditions. Acidic leaching with sulfuric acid is the preferred choice. Lithium is precipitated from this acidic leach solution by sodium carbonate.

CN115784272A discloses a method for recovering lithium salt from a lithium-containing aluminium smelting slag.

JP2020029613 describes the combination of a reducing smelting step with an aqueous leaching step for the recovery of valuable metals in waste Li-ion batteries. The leaching step is performed on the slag prepared in the smelting step, with the aim of recovering Li in a leach solution. The slag is leached in slightly acidified water at a pH of 5 to 7 under normal pressure at a temperature below 100 °C. Pressure leaching is said to be unnecessary. Particle diameters between 0.5 and 5 mm are preferred. The pH of the solution is said to gradually increase to 11 or more due to the dissolution of Li. This helps in precipitating any Ni, Co, Cu and Fe, which are not desired in the solution. When the amount of Li is small, a watersoluble alkaline can be added to the mixture to ensure a basic pH of 11 or higher. The mixture is then filtered.

According to the above-cited documents, the Li is leached in acidic conditions, thereby producing a soluble salt such as LiCl or Li₂SO₄. This salt has to be converted to insoluble Li₂CO₃, or to LiOH, which is then precipitated. The reported alkaline conditions only pertain to the subsequent purification of the solution.

It has now been found that Li in a slag can be selectively leached using specific amounts of an alkaline Ca-compound. Under optimized conditions, Li leaching yields of 80% or more can be achieved. LiOH is formed during the leaching step, thus rendering the additional conversion of the Li salt to LiOH redundant.

In order to produce battery-grade Li, the LiOH solution can be purified by e.g. precipitation of impurities, ion exchange or by using selective membranes. High purity Li is readily obtainable using crystallization, such as evaporation crystallization to produce solid LiOH, or reactive crystallization with carbonates to produce solid Li₂CO₃.

The invention is defined by appended claim 1, preferred embodiments are defined by the dependent claims.

According to the invention, a process is described for the recovery of Li from a Li-containing metallurgical slag, comprising the steps of:
- powdering the metallurgical slag to a particle size distribution having a D50 of less than 100 µm, calculated from the cumulative undersize distribution by volume in accordance with ISO 13320:2020;
- contacting, in an aqueous medium, the Li-containing metallurgical slag, and an alkaline Ca-compound, provided in amounts selected to obtain a molar ratio of the Ca in the Ca-compound to Li in the slag of 0.75-1, thereby obtaining a suspension;
- heating the suspension to a temperature of 100 to 200 °C for at least 30 min, thereby obtaining a leached suspension; and,
- separating solids from liquids in the leached suspension, thereby obtaining a leach solution containing a major part of the Li, and a solid residue containing Ca.

The metallurgical slag is typically obtained by recycling Li-ion batteries or their waste using smelting. Such a smelting process produces slags containing Li in amounts of at least 0.2 wt%, but more typically of more than 1 wt%, or even more than 2.5 wt%. These slags are a suitable feedstock for the present process.

According to the stoichiometry, it would be expected that one mole of Ca would suffice for leaching two moles of Li, resulting in a molar ratio of 0.5. Surprisingly, it has been observed that a significant excess of Ca is in fact needed. This excess could be quantified, resulting in a lower limit of 0.75 for the molar Ca to Li ratio. This lower limit corresponds to 150% of the stoichiometric amount.

To allow for the formation of an alloy phase and a slag phase during smelting, so-called slag formers or fluxing agents are used. Typical slag formers are for example CaO and SiO₂. Remarkably, the CaO in the slag has to be considered as nonreactive in the present Li leaching process. The specified amount of an alkaline Ca-compound, such as CaO, Ca(OH)₂, or CaCO₃ has therefore to be added in the contacting step irrespective of the Ca in the slag.

The amount of Li in the metallurgical slag can be determined by chemical analysis. The skilled person can then easily derive the amount of Ca-compound needed in the contacting step.

The specified amount of Ca-compound for this process can be added all at once, or, alternatively, in steps.

The steps of contacting, heating, and solid-liquid separation, which together perform the leaching, can be repeated on the solid residue to further increase the Li-yield. The specified amount of Ca-compound may then be distributed across the repeated contacting steps. A counter-current flow of aqueous solution and solid residue is hereby particularly useful as it lowers the overall water consumption while optimizing the Li leaching yield.

The process of the present invention can be operated in batch or in continuous mode.

The heating and the reaction time may be somewhat correlated according to generally known rules: lower temperatures may imply longer reaction times to reach optimal Li leaching yields, while higher temperatures may increase the kinetics.

By "major part" of an element is meant 50% or more of the amount of that element entering the process.

In another embodiment, the metallurgical slag originates from the recycling of Li-ion batteries or their waste using a pyrometallurgical smelting process. Li-ion batteries or their waste comprise spent or end-of-life batteries, production crap, or battery constituents such as electrode foils, electrolytes, separators, casing material and electrode materials, or preprocessed battery materials, such as "black mass", resulting in very complex waste streams.

In another embodiment, the slag is powdered by comminution or atomization. This ensures faster and more complete dissolution of Li. Comminution by milling is a preferred option. Milling can be performed during the contacting step.

In another embodiment, the metallurgical slag has a particle size distribution having a D50 below 50 µm, preferably below 25 µm, more preferably below 15 µm. The particle size distribution is measured by laser diffraction according to ISO 13320:2020 Standard. The D50 is the particle size, in µm, whereby the volumetric cumulative distribution reaches 50%. Through a small particle size, the Li-compounds are more exposed to the Ca-compound in the solution. Particles having a D50 of 5 to 30 µm showed excellent Li leaching yields and kinetics. Further lowering the particle size increases kinetics of the process, but will have only limited impact on the overall leach yield.

The sequence of addition of slag, Ca-compound, and aqueous medium in the contacting step is not critical. For example, in one embodiment, the Ca-compound is added to the metallurgical slag prior to contacting their mixture with the aqueous medium.

In another embodiment, the Ca-compound is added in an amount selected to have a molar ratio of the Ca in the Ca-compound to the Li in the slag of 1 to 1.5, preferably from 1.1 to 1.3, and more preferably from 1.1 to 1. These ratios provide for good Li yield while avoiding excessive reactant costs.

In another embodiment, the Ca-compound is CaO, Ca(OH)₂, or CaCO₃. CaCO₃ is a preferred choice, while CaO and Ca(OH)₂ are even more preferred.

In another embodiment, the Ca-compound is in the form of a powder. This facilitates the reactions with the aqueous medium as well as with the slag.

In another embodiment, the step of contacting is performed using a solid to liquid ratio of 50 to 500 g/L. This ensures the suspension of the solids in the aqueous medium with a reasonable agitation power in the contacting and heating reactor or reactors.

The step of heating is performed at 100 to 200°C, preferably at 110 to 150 °C. It has been found that higher reaction temperatures of more than 100°C substantially increase the Li yield. Operating at temperatures below 70 °C may be workable, but this would require an impractical reaction time to reach the desired Li yield of at least 50%. Higher temperature in the range from 100 °C to 200 °C are preferred for economic reasons. On the other hand, increasing the reactor temperature to more than 150 °C does not significantly improve the Li yield anymore.

In another embodiment, the process is performed in aqueous medium comprising dissolved salts. For example, 1 mol/L of dissolved Na₂SO₄ or NaOH will elevate the boiling point of the aqueous medium, allowing to operate the heating step somewhat above 100°C while avoiding the use, and the costs, of a pressure reactor.

In another embodiment, the step of heating step is performed for a period of 30 to 600 min, preferably for 90 to 400 min, and more preferably for 180 to 360 min.

In another embodiment, the Ca-compound is premixed with the metallurgical slag before the step of contacting. For example, the Ca-compound can be added during comminution of the slag.

In another embodiment, the solid residue, obtained in the step of separating solids from liquids in the leached suspension, is milled. This is useful when the steps of contacting, heating, and solid-liquid separation are repeatedly applied.

In another embodiment, the metallurgical slag further comprises 5 to 50 wt% Al₂O₃, preferably 30 to 50 wt%. Al is frequently present in the metallurgical slag, as the casing of Li-ion batteries or cathode foils are made of Al. Al is very easily oxidized and fully reports to the slag.

In another embodiment, the metallurgical slag further comprises 2 to 50 wt% SiO₂, preferably 2 to 20 wt%, more preferably 2 to 10 wt%. SiO₂ is frequently added to a metallurgical slag as a flux, lowering the melting point of the slag, or rendering it less viscous. Si is very easily oxidized and fully reports to the slag.

In another embodiment, the metallurgical slag further comprises 10 to 70 wt% MnO, preferably 10 to 40 wt%, and more preferably 15 to 30 wt%. Mn is often present as an active ingredient of the cathodes. It is easily oxidized and mainly reports to the slag.

In another embodiment, in the contacting step, smelter fumes comprising LiF, and an additional alkaline Ca-compound are provided in amounts selected to obtain a molar ratio of the Ca in the additional Ca-compound to Li in the fumes of 0.25 to 0.5. Li fumes may comprise different Li-salts. Some of them, such as LiF, consume a stoichiometric amount of the Ca-compound to dissolve, while most others, such as LiBr, LiCl, and Li₂O dissolve readily, without any need for Ca. In contrast to the first embodiment, the additional amount of Ca for leaching LiF corresponds to the expected molar ratio of 0.5. This additional amount could however be even lower, down to 0.25, in particular when the amount of Ca-compound used for leaching the Li in the slag is on the high side, resulting in a large nonreacted excess. For practical reasons, the same Ca-compound is preferably chosen for leaching the Li in the slag and in the fumes.

In another embodiment, the Li-containing metallurgical slag obtained from a first pyrometallurgical smelting process, and the Li-containing smelter fumes, obtained from the same or another pyrometallurgical smelting step, are premixed, thereby obtaining a heterogeneous, Li-enriched mixture.

In another embodiment, the solid residue is used as a substitute for cement. The solid residue or leaching residue is the insoluble part that is left after the process of the present invention is carried out. It may be used, at least partially, as a cement replacement.

The following Examples illustrate the invention.

### Example 1: effect of the temperature

Li slag containing 4.35 wt% Li, 21.4 wt% Al, 21.7 wt% Si, 17.6 wt% Ca, 1.12 wt% Mn, 1.30 wt% Mg, and 0.74 wt% Fe is milled to a particle size distribution having a D50 of about 5 to 8 µm. 30 g of this slag, 125 mL water, and 10.5 g of CaO are added in a pressure reactor. The molar ratio of the Ca in the added CaO to the Li in the slag equals 1. The reactor is heated to 120 °C and maintained at this temperature for 90 minutes. The leached suspension is filtered, and the solid residue washed and dried. A leach solution is obtained having a Li concentration of 8.98 g/L, corresponding to a yield of 75%. The elemental content of the feed, of the resulting leach solution, and of the solid residue is shown in Table 1.

**Table 1: Mass balance (g) of the leaching process performed at 120 °C (base case)**

| | Slag | CaO | Leach solution | Solid residue |
|---|---|---|---|---|
| Li | 1.31 | | 0.98 | 0.33 |
| Al | 6.42 | | 0.06 | 6.36 |
| Ca | 5.28 | 7.53 | 0.003 | 12.8 |
| Mn | 0.34 | | 0 | 0.34 |
| Si | 6.51 | | 0 | 6.51 |

This Example is repeated at different temperatures. The corresponding Li yields are shown in Table 1a.

**Table 1a: Li yield as a function of the heating temperature**

| Temperature (°C) | Li yield (%) |
|---|---|
| 70 | 36 |
| 80 | 50 |
| 120 | 75 |
| 150 | 77 |
| 200 | 76 |

Lowering the reactor temperature to 70 °C results in an inadequate Li yield of 36%. Increasing the reactor temperature to 80 °C or higher significantly improves the Li dissolution. Further increasing the temperature to more than 120 or more than 150 °C has only a limited effect.

### Example 2: effect of the Ca/Li ratio

30 g of the milled slag according to Example 1, 125 mL water, and 15.8 g of CaO are added in a pressure reactor. The molar ratio of the Ca in the added CaO to the Li in the slag equals 1.5. The reactor is heated to 150 °C and maintained at this temperature for 90 minutes. The leached suspension is filtered, and the solid residue washed and dried. A leach solution is obtained having a Li concentration of 9.82 g/L, corresponding to a yield of 78%. The elemental content of the feed, of the resulting leach solution, and of the solid residue is shown in Table 2.

**Table 2: Mass balance (g) of the leaching process performed with a Ca/Li ratio of 1.5 (base case)**

| | Li slag | CaO | Leach solution | Solid residue |
|---|---|---|---|---|
| Li | 1.31 | | 1.02 | 0.29 |
| Al | 6.42 | | 0.11 | 6.31 |
| Ca | 5.28 | 11.3 | 0.004 | 16.54 |
| Mn | 0.34 | | 0 | 0.34 |
| Si | 6.51 | | 0 | 6.51 |

This Example is repeated using different Ca/Li ratios. The corresponding Li yields are shown in Table 2a.

**Table 2a: Li yield as a function of the Ca/Li ratio**

| Ca/Li ratio | Li yield (%) |
|---|---|
| 0.5 | 37 |
| 0.75 | 54 |
| 1.0 | 67 |
| 1.5 | 78 |

A Ca/Li ratio to 0.5 results in an inadequate Li yield of 37%. Increasing the Ca/Li ratio to 0.75 significantly improves the Li yield. The Li yield further increases when even more Ca is added.

### Example 3: effect of the heating time using pressure leaching

Li slag containing 4.1 wt% Li, 20.1 wt% Al, 7.0 wt% Si, 15.5 wt% Ca, 6.6 wt% Mn, 1.99 wt% Mg, and 0.90 wt% Fe is milled to a particle size distribution having a D50 of about 5 to 8 µm. 20 g of this slag, 125 mL water, and 10.5 g of CaO are added in a pressure reactor. The molar ratio of the Ca in the added CaO to the Li in the slag equals 1.5. The reactor is heated to 150 °C and maintained at this temperature for 270 minutes. The leached suspension is filtered, and the solid residue washed and dried. A leach solution is obtained having a Li concentration of 6.84 g/L, corresponding to a yield of 88%. The elemental content of the feed, of the resulting leach solution, and of the solid residue is shown in Table 3.

**Table 3: Mass balance (g) of the leaching process performed for 270 min (base case)**

| | Li slag | CaO | Leach solution | Solid residue |
|---|---|---|---|---|
| Li | 0.82 | | 0.72 | 0.10 |
| Al | 4.02 | | 0.041 | 3.98 |
| Ca | 3.10 | 7.5 | 0.002 | 10.6 |
| Mn | 1.32 | | 0 | 1.32 |
| Si | 1.40 | | 0 | 1.40 |

This Example is repeated using different leaching times. The corresponding Li yields are shown in Table 3a.

**Table 3a: Li yield as a function of the leaching time**

| Reaction time (min) | Li yield (%) |
|---|---|
| 30 | 68 |
| 45 | 77 |
| 90 | 82 |
| 180 | 85 |
| 270 | 88 |
| 360 | 90 |

The major part of the Li is leached after 30 minutes only. Longer times result in enhanced yields. Such longer times may be useful when a lower temperature is selected, or when coarser slag particles are treated.

### Example 4: effect of the heating time at atmospheric pressure

Li slag containing 4.3 wt% Li, 16.8 wt% Al, 4.5 wt% Si, 17.7 wt% Ca, 11 wt% Mn, 1.3 wt% Mg, and 2.5 wt% Fe is milled to a particle size distribution having a D50 of about 5 to 8 µm. 200 g of this slag, 1000 mL water, and 140 g of Ca(OH)₂ are added in a pressure reactor. The molar ratio of the Ca in the added Ca(OH)₂ to the Li in the slag equals 1.5. The reactor is heated to 90 °C and maintained at this temperature for 360 minutes. The leached suspension is filtered, and the solid residue washed and dried. A leach solution is obtained having a Li concentration of 4.2 g/L, corresponding to a yield of 59%. The elemental content of the feed, of the resulting leach solution, and of the solid residue is shown in Table 4.

**Table 4: Mass balance (g) of the leaching process performed for 270 min (base case)**

| | Li slag | Ca(OH)₂ | Leach solution | Solid residue |
|---|---|---|---|---|
| Li | 8.6 | | 5.1 | 3.5 |
| Al | 33.6 | | 0.025 | 33.6 |
| Ca | 35.4 | 76 | 0.002 | 35.4 |
| Mn | 22 | | 0 | 22 |
| Si | 8.8 | | 0 | 8.8 |

This Example is repeated using different leaching times. The corresponding Li yields are shown in Table 4a.

**Table 4a: Li yield as a function of the leaching time**

| Reaction time (min) | Li yield (%) |
|---|---|
| 360 | 59 |
| 720 | 72 |

The major part of the Li is leached after 360 minutes at 90°C. Longer times result in enhanced yields. Compared to Example 3, lower temperatures expectedly need longer reaction times in order to leach the majority of Li.

### Example 5: effect of the particle size distribution

Li slag containing 4.41 wt% Li, 19.8 wt% Al, 6.48 wt% Si, 23.8 wt% Ca, 0.93 wt% Mn, 1.30 wt% Mg and 0.81 wt% Fe is milled to a particle size distribution having a D50 of about 9. 8 µm. 200 g of this slag, 1 L water, and 107 g of CaO are added in a pressure reactor. The molar ratio of the Ca in the added CaO to the Li in the slag equals 1.5. The reactor is heated to 150 °C and maintained at this temperature for 10 hours. The leached suspension is filtered, and the solid residue washed and dried. A leach solution is obtained having a Li concentration of 7.5 g/L, corresponding to a yield of 85%. The elemental content of the feed, of the resulting leach solution, and of the solid residue is shown in Table 5.

**Table 5: Mass balance (g) of the leaching process performed on a slags with a D50 of 9.8 µm (base case)**

| | Li slag | CaO | Leach solution | Solid residue |
|---|---|---|---|---|
| Li | 8.82 | | 7.5 | 1.32 |
| Al | 39.6 | | 0.4 | 39.2 |
| Ca | 47.6 | 76.5 | 0.05 | 124.1 |
| Mn | 1.86 | | 0 | 1.86 |
| Si | 13.0 | | 0 | 13.0 |

This Example is repeated using different milling conditions, producing slags with different particle size distributions. These are primarily characterized by their D50. The corresponding Li yields are shown in Table 5a.

**Table 5a: Li yield as a function of the particle size distribution**

| D50 (µm) | Li yield (%) |
|---|---|
| 7.61 | 93 |
| 9.8 | 85 |
| 11.2 | 77 |
| 24.1 | 75 |
| 95.5 | 52 |

With a D50 of 95.5 µm, a marginally acceptable 52% of the Li dissolves. Further decreasing the particle size to below 50 µm greatly increases the Li yield.

### Example 6: illustration of a 2-step leaching process

30 g of the milled slag according to Example 1, 125 mL water, and 13.2 g of CaO are added in a pressure reactor. The molar ratio of the Ca in the added CaO to the Li in the slag equals 1.25. The reactor is heated to 150 °C and maintained at this temperature for 90 minutes. The first leached suspension is filtered, and the solid residue washed and dried. A first leach solution is obtained having a Li concentration corresponding to a yield of 78%.

The dry leaching residue, 165 mL of H₂O, and 2.6 g of CaO are added in a pressure reactor. This increases the total process molar ratio of the Ca in the added CaO to the Li in the slag to 1.5. The reactor is heated to 150 °C and maintained at this temperature for 90 minutes. The second leached suspension is filtered, and the solid residue washed and dried. A second Li-bearing leach solution is obtained, raising the total process Li yield to 90%. The final residue is depleted in Li.

**Table 6: Mass balance (g) of the 2-step leaching process**

| | Li slag | CaO | First leach solution | Second leach solution | Final residue |
|---|---|---|---|---|---|
| Li (g) | 1.31 | | 1.02 | 0.16 | 0.13 |
| Al (g) | 6.42 | | 0.05 | 0.01 | 6.36 |
| Ca (g) | 5.3 | 11.3 | 0.003 | 0.02 | 16.6 |
| Mn (g) | 0.34 | | 0 | 0 | 0.34 |
| Si (g) | 6.51 | | 0 | 0 | 6.51 |

The Li yield can be enhanced by repeating the leaching operation on the solid residue. The total amount of Ca added can then be distributed across the different leaching steps.

## Claims

1. Process for the recovery of Li from a Li-containing metallurgical slag obtained from recycling Li-batteries or their waste using a smelting process, comprising the steps of:
- powdering the metallurgical slag to a particle size distribution having a D50 of less than 100 µm, calculated from the cumulative undersize distribution by volume in accordance with ISO 13320:2020;
- contacting, in an aqueous medium, the Li-containing metallurgical slag, and an alkaline Ca-compound, provided in amounts selected to obtain a molar ratio of the Ca in the Ca-compound to Li in the slag of 0.75 to 1.5, thereby obtaining a suspension;
- heating the suspension to a temperature of 100 to 200 °C for at least 30 min, thereby obtaining a leached suspension; and,
- separating solids from liquids in the leached suspension, thereby obtaining a leach solution containing a major part of the Li, and a solid residue containing Ca.

2. Process according to claim 1, wherein the metallurgical slag originates from the recycling of Li-ion batteries or their waste.

3. Process according to claim 1 or 2, wherein the powdering of the slag is performed by comminution or atomization.

4. Process according to any one of claims 1 to 3, wherein the metallurgical slag has a particle size distribution having a D50 below 50 µm,preferably below 25 µm,more preferably below 15 µm,calculated from the cumulative undersize distribution by volume in accordance with ISO 13320:2020.

5. Process according to any one of claims 1 to 4, wherein the Ca-compound is provided in an amount selected to obtain a molar ratio of the Ca in the Ca-compound to the Li in the slag of 1 to 1.5, preferably 1.1 to 1.3.

6. Process according to any one of claims 1 to 5, wherein the Ca-compound is CaO, Ca(OH)₂, or CaCO₃.

7. Process according to any one of claims 1 to 6, wherein the step of contacting is performed using a solid to liquid ratio of 50 to 500 g/L.

8. Process according to any one of claims 1 to 7, wherein the step of heating is performed at a temperature of 110 to 150 °C.

9. Process according to any one of claims 1 to 8, wherein the step of heating is performed for a period of 30 to 600 min, preferably 90 to 400 min, and more preferably 180 to 360 min.

10. Process according to any one of claims 1 to 9, wherein the Ca-compound is premixed with the metallurgical slag before the step of contacting.

11. Process according to any one of claims 1 to 10, wherein the solid residue is milled.

12. Process according to any one of claims 1 to 11, wherein the metallurgical slag further comprises 5 to 50 wt% Al₂O₃, preferably 30 to 50 wt%.

13. Process according to any one of claims 1 to 12, wherein the metallurgical slag further comprises 2 to 50 wt% SiO₂, preferably 2 to 20 wt%, more preferably 2 to 10 wt%.

14. Process according to any one of claims 1 to 13, wherein the metallurgical slag further comprises 10 to 70 wt% MnO, preferably 10 to 40 wt%, and more preferably 15 to 30 wt%.

15. Process according to any one of claims 1 to 14, wherein, in the contacting step, smelter fumes comprising LiF, and an additional alkaline Ca-compound are provided in amounts selected to obtain a molar ratio of the Ca in the additional Ca-compound to Li in the fumes of 0.25 to 0.5.

## Patentansprüche

1. Verfahren zur Rückgewinnung von Li aus einer Li-haltigen metallurgischen Schlacke, die aus dem Recycling von Li-Batterien oder deren Abfällen unter Verwendung eines Schmelzverfahrens gewonnen wird, umfassend die folgenden Schritte:
- Zerkleinern der metallurgischen Schlacke auf eine Partikelgrößenverteilung mit einem D50-Wert von weniger als 100 µm, berechnet aus der kumulativen Untergrößenverteilung nach Volumen gemäß ISO 13320:2020;
- Inkontaktbringen der Li-haltigen metallurgischen Schlacke mit einer alkalischen Ca-Verbindung in einem wässrigen Medium, wobei die Mengen der Ca-Verbindung so gewählt sind, dass ein molares Verhältnis von Ca in der Ca-Verbindung zu Li in der Schlacke von 0,75 bis 1,5 erreicht wird, wodurch eine Suspension erhalten wird;
- Erhitzen der Suspension auf eine Temperatur von 100 bis 200 °C für mindestens 30 Minuten, wodurch eine ausgelaugte Suspension erhalten wird; und
- Abtrennen der Feststoffe von den Flüssigkeiten in der ausgelaugten Suspension, wodurch eine Auslaugungslösung, die einen Großteil des Li enthält, und ein Ca-haltiger fester Rückstand erhalten werden.

2. Verfahren nach Anspruch 1, wobei die metallurgische Schlacke aus dem Recycling von Lithium-Ionen-Batterien oder deren Abfällen stammt.

3. Verfahren nach Anspruch 1 oder 2, wobei die Pulverisierung der Schlacke durch Zerkleinerung oder Zerstäubung erfolgt.

4. Verfahren nach einem der Ansprüche 1 bis 3, wobei die metallurgische Schlacke eine Partikelgrößenverteilung mit einem D50-Wert unter 50 µm, vorzugsweise unter 25 µm, noch bevorzugter unter 15 µm aufweist, berechnet aus der kumulativen Untergrößenverteilung nach Volumen gemäß ISO 13320:2020.

5. Verfahren nach einem der Ansprüche 1 bis 4, wobei die Ca-Verbindung in einer Menge bereitgestellt wird, die so gewählt ist, dass ein Molverhältnis von Ca in der Ca-Verbindung zu Li in der Schlacke von 1 bis 1,5, vorzugsweise von 1,1 bis 1,3, erhalten wird.

6. Verfahren nach einem der Ansprüche 1 bis 5, wobei die Ca-Verbindung CaO, Ca(OH)₂ oder CaCO₃ ist.

7. Verfahren nach einem der Ansprüche 1 bis 6, wobei der Schritt des Inkontaktbringens unter Verwendung eines Feststoff-Flüssigkeits-Verhältnisses von 50 bis 500 g/l durchgeführt wird.

8. Verfahren nach einem der Ansprüche 1 bis 7, wobei der Erhitzungsschritt bei einer Temperatur von 110 bis 150 °C durchgeführt wird.

9. Verfahren nach einem der Ansprüche 1 bis 8, wobei der Erhitzungsschritt über einen Zeitraum von 30 bis 600 min, vorzugsweise 90 bis 400 min und noch bevorzugter 180 bis 360 min durchgeführt wird.

10. Verfahren nach einem der Ansprüche 1 bis 9, wobei die Ca-Verbindung vor dem Inkontaktbringen mit der metallurgischen Schlacke vorgemischt wird.

11. Verfahren nach einem der Ansprüche 1 bis 10, wobei der feste Rückstand gemahlen wird.

12. Verfahren nach einem der Ansprüche 1 bis 11, wobei die metallurgische Schlacke ferner 5 bis 50 Gew.-% Al₂O₃, vorzugsweise 30 bis 50 Gew.-%, enthält.

13. Verfahren nach einem der Ansprüche 1 bis 12, wobei die metallurgische Schlacke ferner 2 bis 50 Gew.-% SiO₂, vorzugsweise 2 bis 20 Gew.-%, noch bevorzugter 2 bis 10 Gew.-%, enthält.

14. Verfahren nach einem der Ansprüche 1 bis 13, wobei die metallurgische Schlacke ferner 10 bis 70 Gew.-% MnO, vorzugsweise 10 bis 40 Gew.-% und noch bevorzugter 15 bis 30 Gew.-% enthält.

15. Verfahren nach einem der Ansprüche 1 bis 14, wobei im Kontaktierungsschritt Schmelzrauchgase, die LiF enthalten, und eine zusätzliche alkalische Ca-Verbindung in solchen Mengen zugeführt werden, dass ein Molverhältnis von Ca in der zusätzlichen Ca-Verbindung zu Li in den Rauchgasen von 0,25 bis 0,5 erreicht wird.

## Revendications

1. Procédé de récupération du lithium à partir d'un laitier métallurgique contenant du lithium, obtenu par le recyclage de batteries au lithium ou de leurs déchets à l'aide d'un procédé de fusion, comprenant les étapes suivantes :
- la réduction en poudre du laitier métallurgique jusqu'à obtenir une distribution granulométrique présentant un D50 inférieur à 100 µm, calculé à partir de la distribution cumulative en volume des particules de taille inférieure, conformément à la norme ISO 13320:2020 ;
- mettre en contact, dans un milieu aqueux, le laitier métallurgique contenant du Li et un composé alcalin de Ca, fournis en quantités choisies de manière à obtenir un rapport molaire entre le Ca du composé de Ca et le Li du laitier compris entre 0,75 et 1,5, ce qui permet d'obtenir une suspension ;
- chauffer la suspension à une température comprise entre 100 et 200 °C pendant au moins 30 minutes, ce qui permet d'obtenir une suspension de lixiviation ; et,
- séparer les solides des liquides dans la suspension lixiviée, ce qui permet d'obtenir une solution de lixiviation contenant la majeure partie du Li, et un résidu solide contenant du Ca.

2. Procédé selon la revendication 1, dans lequel le laitier métallurgique provient du recyclage de batteries lithium-ion ou de leurs déchets.

3. Procédé selon la revendication 1 ou 2, dans lequel la réduction en poudre du laitier est réalisée par broyage ou par atomisation.

4. Procédé selon l'une quelconque des revendications 1 à 3, dans lequel le laitier métallurgique présente une distribution granulométrique ayant un D50 inférieur à 50 µm, de préférence inférieur à 25 µm, plus préférablement inférieur à 15 µm, calculé à partir de la distribution cumulative en volume des particules sous-dimensionnées conformément à la norme ISO 13320:2020.

5. Procédé selon l'une quelconque des revendications 1 à 4, dans lequel le composé de Ca est fourni en une quantité choisie pour obtenir un rapport molaire entre le Ca du composé de Ca et le Li du laitier compris entre 1 et 1,5, de préférence entre 1,1 et 1,3.

6. Procédé selon l'une quelconque des revendications 1 à 5, dans lequel le composé de Ca est du CaO, du Ca(OH)₂ ou du CaCO₃.

7. Procédé selon l'une quelconque des revendications 1 à 6, dans lequel l'étape de mise en contact est réalisée en utilisant un rapport solide/liquide compris entre 50 et 500 g/L.

8. Procédé selon l'une quelconque des revendications 1 à 7, dans lequel l'étape de chauffage est réalisée à une température comprise entre 110 et 150 °C.

9. Procédé selon l'une quelconque des revendications 1 à 8, dans lequel l'étape de chauffage est réalisée pendant une durée de 30 à 600 min, de préférence de 90 à 400 min, et de manière encore plus préférable de 180 à 360 min.

10. Procédé selon l'une quelconque des revendications 1 à 9, dans lequel le composé de Ca est prémélangé avec le laitier métallurgique avant l'étape de mise en contact.

11. Procédé selon l'une quelconque des revendications 1 à 10, dans lequel le résidu solide est broyé.

12. Procédé selon l'une quelconque des revendications 1 à 11, dans lequel le laitier métallurgique comprend en outre 5 à 50 % en poids d´Al₂O₃, de préférence 30 à 50 % en poids.

13. Procédé selon l'une quelconque des revendications 1 à 12, dans lequel le laitier métallurgique comprend en outre 2 à 50 % en poids de SiO₂, de préférence 2 à 20 % en poids, et de manière plus préférentielle 2 à 10 % en poids.

14. Procédé selon l'une quelconque des revendications 1 à 13, dans lequel le laitier métallurgique comprend en outre 10 à 70 % en poids de MnO, de préférence 10 à 40 % en poids, et de manière plus préférentielle 15 à 30 % en poids.

15. Procédé selon l'une quelconque des revendications 1 à 14, dans lequel, lors de l'étape de mise en contact, des fumées de fonderie comprenant du LiF et un composé alcalin supplémentaire à base de Ca sont fournies en quantités choisies de manière à obtenir un rapport molaire entre le Ca présent dans le composé supplémentaire à base de Ca et le Li présent dans les fumées compris entre 0,25 et 0,5.
